# EUROPEAN PATENT SPECIFICATION

(11) **EP 1 833 945 B1**
(45) Date of publication and mention of the grant of the patent: **28.07.2010**
(21) Application number: 05821763.9
(22) Date of filing: 07.12.2005
(51) Int. Cl.: C09K 11/06, D21H 21/30

(54) **AQUEOUS DISPERSIONS OF OPTICAL BRIGHTENERS**
WÄSSRIGE DISPERSION OPTISCHER AUFHELLMITTEL
DISPERSIONS AQUEUSES D'AGENTS DE BLANCHIMENT OPTIQUES

(30) Priority: 09.12.2004 EP 04029167
(43) Date of publication of application: 19.09.2007
(73) Proprietor: Clariant Finance (BVI) Limited, Road Town, Tortola (VG)
(72) Inventor: FARRAR, John Martin, Leeds LS19 6RQ (GB)
(74) Representative: Jacobi, Carola
(86) International application number: PCT/EP2005/056560
(87) International publication number: WO 2006/061399

(56) References cited:
- WO-A-98/42685
- WO-A-02/055646
- DE-A1- 2 715 864
- DE-A1- 4 401 471
- GB-A- 2 171 407
- US-A- 5 076 968

## Description

The instant invention relates to aqueous dispersions of one or more optical brightening agent (OBA) which do not need dispersants or other stabilizing additives in order to avoid sedimentation during storage. The optical brighteners are sulfonated triazinylaminostilbene compounds which have excellent properties for whitening of paper and other cellulosic substrates.

Aqueous dispersions of optical brighteners are known in the art. DE-A-2 715 864 discloses slurries which are stabilized by the use of anionic, cationic or non-ionic dispersants. US 5,076,968 discloses the use of anionic polysaccharides for obtaining storage-stable suspensions of fluorescent whitening agents. Also EP-A-385 374 discloses anionic polysaccharides, especially Xanthan, as stabilizing agent.

However, any additional additive may have an adverse effect during the brightening process and therefore an aqueous dispersion not needing any stabilizing agent like dispersants or other compounds would be of technical advantage.

Surprisingly it has now been found that storage-stable aqueous dispersions of sulfonated triazinylaminostilbene compounds which do not contain such additives can be prepared and used advantageously for optical brightening of paper, textiles or other cellulosic substrates.

An object of the present invention therefore is an aqueous dispersion containing as active substance one or more optical brighteners of formula (I) 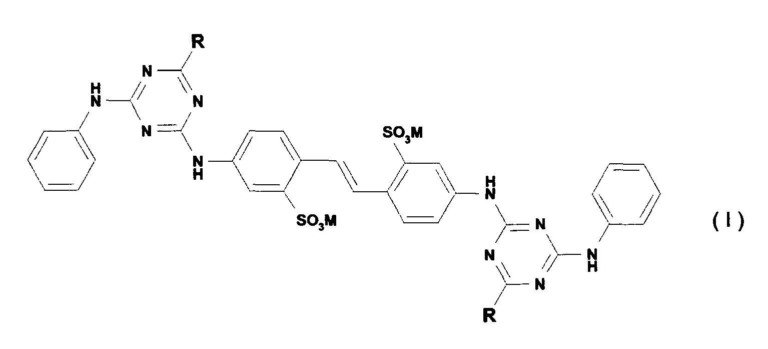 where
- R: is a radical of formula (II), (III) or (IV) 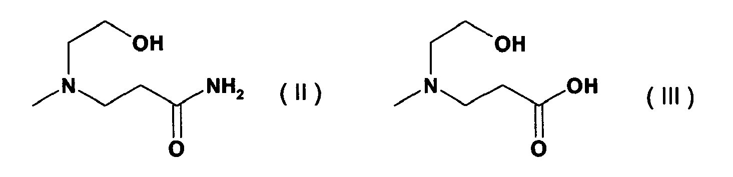 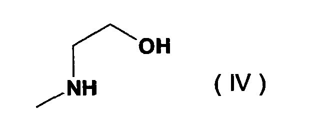 and where both radicals R may be identical or different,
- M: is an alkali metal cation or an ammonium cation unsubstituted or substituted with a C₁-C₄-alkyl or -hydroxyalkyl group.

Preferred are dispersions wherein M is Na⁺, Li⁺, K⁺ or an ammonium cation substituted with a C₁-C₂-alkyl or -hydroxyalkyl group. Most preferred is Na⁺.

Also preferred are dispersions containing a mixture of 2 to 4 optical brighteners of formula (I) with different R's.

The instant dispersions contain 10 to 40 % by weight of active substance, preferably from 14 to 26 % by weight of active substance.

If appropriate, the instant dispersions may contain additionally from 0.01% to 0.5% by weight of an antifoaming agent, of a biocide or both compounds in said quantities.

The optical brighteners of formula (I) are known substances and can be prepared by known methods, as described in the examples.

The instant dispersions are prepared without the use of any dispersants or stabilizing agents and are nevertheless storage-stable. This is absolutely unexpected as from the prior art such dispersions always needed some additive to get a stable slurry. Therefore a further object of the present invention is a process for the preparation of such a dispersion characterized that the hot organic oily phase resulting from the synthesis of the optical brightener is stirred into cold water, is allowed to cool to ambient temperature under continued stirring, seeded with a small amount of the previously prepared slurry (0.1% - 1% by weight) and finally diluted to the correct strength.

The instant dispersions are well suited for optical brightening of paper, textiles or other cellulosic substrates without the disadvantage of having possibly disturbing additives in it.

The instant dispersions may be added directly to a pulp suspension, in general 0.1 to 5 %, preferably 1 to 3 % by weight based on dry fibre, are used for producing paper sheets, which are then pressed and dried.

The instant dispersions may also be added directly to aqueous coating compositions which may be obtained by mixing together chalk or other white pigments, one or more dispersing agents, a primary latex binder and eventually a secondary binder, and eventually other additives. In general 0.1 to 5 %, preferably 1 to 3 % by weight based on dry fibre of the instant dispersions are used for the coating composition, which is then applied to the paper sheet, the coated paper sheet then being dried.

The following examples shall explain the instant invention in more detail.

### EXAMPLES

If not indicated otherwise, "%" means "% by weight".

### GENERAL SYNTHESIS

The synthesis of the OBA slurry is carried out in water. Cyanuric chloride is slurried in water containing a wetting agent and ice. An aqueous solution of 4,4'-diamino-2,2'-stilbene-disulphonic acid is added at 0 °C - 5 °C keeping the pH at 4 - 6 with a dilute solution of sodium hydroxide. Once the addition is complete the reaction mixture is stirred for a further hour allowing temperature to rise to ∼ 10 °C. Aniline is then added and the reaction mixture slowly heated to 60 °C, the pH being kept at 6 - 8 by the addition of dilute sodium hydroxide solution. The reaction is then stirred for a further hour at 80 °C and the addition product of monoethanolamine and acrylamide is added. The reaction mixture is heated to reflux and the pH kept at 8-9 by the addition of dilute sodium hydroxide solution. Once the reaction is complete, the mixture is cooled to 80 °C - 90 °C and the stirrer is stopped. The bottom organic oily layer is run with stirring into sufficient cold water to give an actives content of 20 - 40 %. The mixture is stirred and cooled to ambient temperature and seeded with 0.5% of a previously prepared dispersion. The product crystallizes as a thick dispersion. This dispersion is stirred for 5 - 12 hrs and diluted to the required actives content by the addition of cold water. Stirring is continued for a further hour and the dispersion of the optical brightening agent is packed into containers.

### EXAMPLE 1

The hot oil from the final stage of the reaction (500 g at 51% active matter) is added to 411 ml of cold water with stirring. A solution is formed which contains 28 % active OBA content as measured by UV strength. This solution is cooled with stirring to ambient temperature (20 - 25°C) and seeded with 50g of a previously prepared dispersion, during the cooling period the OBA crystallises out and mixture thickens. Stirring is continued for 5 hours and then the thick suspension is diluted with a further 390 ml of cold water and stirring is continued for a further hour. This gives a dispersion with an actives content of 20 %. The dispersion is a pale yellow colour and although a small amount of settling occurs over a period of several weeks the dispersion is easily restored with a small amount of agitation.

### EXAMPLE 2

Example 1 is repeated but this time 1.14 g of an antifoam (Dispelair CF531 from Blackburn Chemicals) was added along with 1.14 g of a biocide (Nipacide CFB)

### EXAMPLE 3: Application to stock

### METHOD A

200 g of a pulp suspension (2.5 % aqueous suspension of a 50 % mixture of bleached soft wood and hard wood pulps beaten to a freeness of about 20° SR) (SR means Schopper Riegler, it is a standard measurement in the paper industry and measures the difficulty with which water drains from the pulp) is measured into a beaker and stirred. The suspension is stirred for one minute and p % of the product of Example 1 is added (p = 0, 0.1, 0.2, 0.4, 0.8, 1, 1.4, 1.8 and 2; p = 0 representing the blank). After the addition the mixture is stirred for a further minute. The mixture is then diluted to one litre and the paper sheet is formed on a laboratory sheet former (basically this is a cylinder with a wire gauze at the bottom - the cylinder is partly filled with water, the pulp suspension is added, air is then blown through to ensure the pulp is well dispersed, a vacuum is then applied and the pulp slurry is pulled through the wire to leave a paper sheet, this sheet is removed from the wire and pressed and dried). The sheet is left in a humidity cabinet to achieve equilibrium and then the whiteness is measured using a Minolta CM-700d spectrophotometer. The measured values show a surprisingly high whiteness degree and yield.

**TABLE 1: Results of application to stock (Method A)**

| **Concentration based on dry fibre %** | **CIE Whiteness Standard OBA** | **CIE Whiteness Example 1** |
|---|---|---|
| 0 | 77.4 | 77.4 |
| 0.2 | 118.1 | 118.3 |
| 0.4 | 125.8 | 125.6 |
| 0.8 | 137.8 | 137.2 |
| 1.2 | 140.7 | 140.5 |
| 1.6 | 145 | 144.9 |
| 2 | 147.1 | 147.9 |

### EXAMPLE 4: Coating application

A coating composition is prepared containing 3000 parts chalk (fine, white, high purity calcium carbonate with a density by ISO 787/10 of 2.7, commercially available under the trade name HYDROCARB 90 from OMYA), 1932 parts water, 18 parts anionic dispersing agent (such as Polysalz S from BASF), and 600 parts latex (commercially available under the trade name Latex XZ 95085.01 from Dow Chemicals). A predetermined amount of the product of Example 2, (0, 0.313, 0.625, 0.938, 1.25 and 1.875 mmol/kg referred to the optical brightener) is added with stirring to the coating composition, and the solids content is adjusted to 55 % by the addition of water. The so prepared coating composition is then applied to a commercial 75 g/m² neutral-sized (with conventional alkyl ketene dimer), bleached paper base sheet, using an automatic wire-wound bar applicator with astandard speed setting and a standard load on the bar. The coated paper is dried for 5 minutes at 70°C in a hot air flow. The dried paper is allowed to condition, then measured for CIE whiteness on a calibrated Minolta CM-700d spectrophotometer. The measured values show a surprisingly high whiteness degree and yield.

**TABLE 2: Results of coating application for Example 2**

| **Concentration based on dry pigment %** | **CIE Whiteness Standard OBA** | **CIE Whiteness Example 1** |
|---|---|---|
| 0 | 92.4 | 92.4 |
| 0.5 | 96.4 | 96.8 |
| 1 | 100.5 | 100.1 |
| 1.5 | 101.8 | 102 |
| 2 | 101 | 101.1 |
| 3 | 99.6 | 100 |

The instant dispersions show excellent whitening properties.

## Claims

1. Aqueous dispersion containing as active substance one or more optical brighteners of formula (I) 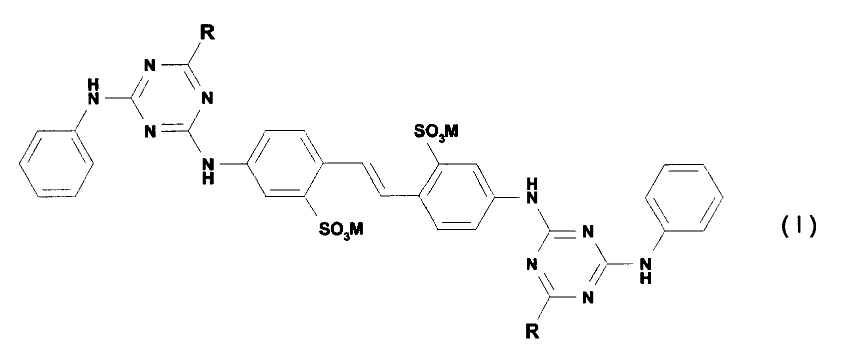 where
R is a radical of formula (II), (III) or (IV) 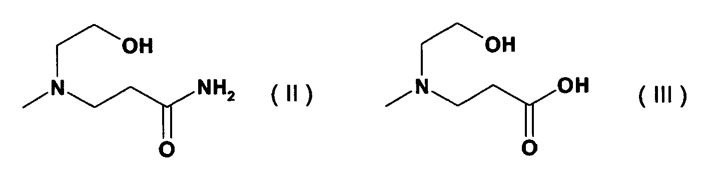 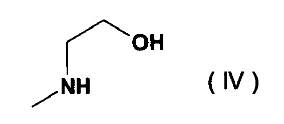 and where both radicals R may be identical or different,
M is an alkali metal cation or an ammonium cation unsubstituted or substituted with a C₁-C₄-alkyl or -hydroxyalkyl group.

2. Dispersion according to claim 1, wherein
M is Na⁺, Li⁺, K⁺ or an ammonium cation substituted with a C₁-C₂-alkyl or - hydroxyalkyl group.

3. Dispersion according to claim 1 or 2 containing a mixture of 2 to 4 optical brighteners of formula (I) with different R's.

4. Dispersion according to any of claims 1 to 3 containing 10 to 40 % by weight of active substance.

5. Dispersion according to any of claims 1 to 5, containing from 14 to 26 % by weight of active substance.

6. Dispersion according to any of claims 1 to 5, containing additionally from 0.01% to 0.5% by weight of an antifoaming agent, of a biocide or of both compounds in said quantities.

7. Dispersion according to any of claims 1 to 6 **characterized in that** no additional dispersing agent or stabilizing agent is contained.

8. Process for the preparation of a dispersion according to any of claims 1 to 7, **characterized** that the hot organic oily phase resulting from the synthesis of the optical brightener is stirred into cold water, is allowed to cool to ambient temperature under continued stirring, seeded with 0.1% - 1% by weight of a previously prepared dispersion and finally diluted to the correct strength.

9. Use of a dispersion according to any of claims 1 to 7 for optical brightening of paper or other cellulosic substrates.

10. Process for whitening of paper comprising the main steps of
- providing a pulp suspension,
- adding 0.1 to 5 % by weight based on dry fibre of a dispersion according to any of claims 1 to 7,
- producing a paper sheet from said pulp suspension,
- pressing and drying the sheet.

11. Process for whitening of paper comprising the main steps of
- preparing an aqueous coating composition by mixing together chalk or other white pigments, one or more dispersing agents, a primary latex binder and eventually a secondary binder, and eventually other additives,
- adding 0.1 to 5 % by weight based on dry fibre of a dispersion according to any of claims 1 to 7,
- applying the coating composition to a paper sheet,
- drying the coated paper sheet.

## Patentansprüche

1. Wäßrige Dispersion, enthaltend als Wirkstoff einen oder mehrere optische Aufheller der Formel (I) 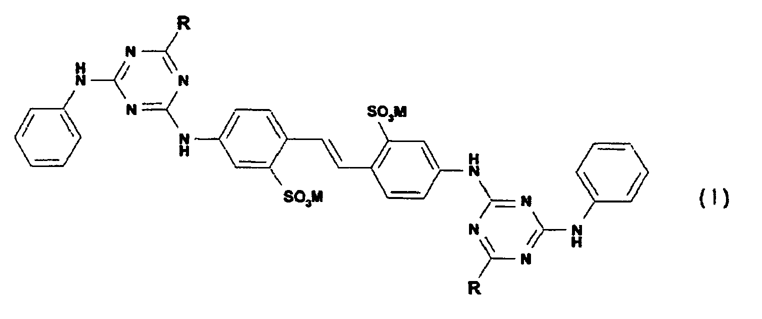 in der
R einen Rest der Formel (II), (III) oder (IV) 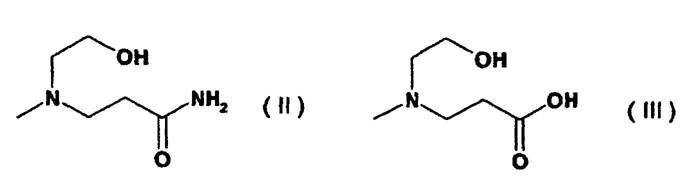 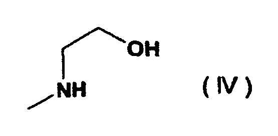 bedeutet und die beiden Reste R gleich oder verschieden sein können,
M ein Alkalimetallkation oder ein unsubstituier- tes oder mit einer C₁-C₄-Alkyl- oder -hydroxyalkylgruppe substituiertes Ammoniumka- tion bedeutet.

2. Dispersion nach Anspruch 1, bei der M Na⁺, Li⁺, K⁺ oder ein mit einer C₁-C₂-Alkyl- oder -hydroxyalkylgruppe substituiertes Ammoniumkation bedeutet.

3. Dispersion nach Anspruch 1 oder 2, enthaltend eine Mischung von 2 bis 4 optischen Aufhellern der Formel (I) mit verschiedenen R.

4. Dispersion nach einem der Ansprüche 1 bis 3, enthaltend 10 bis 40 Gew.-% Wirkstoff.

5. Dispersion nach einem der Ansprüche 1 bis 4, enthaltend 14 bis 26 Gew.-% Wirkstoff.

6. Dispersion nach einem der Ansprüche 1 bis 5, zusätzlich enthaltend 0,01 bis 0,5 Gew.-% eines Antischaummittels, eines Biozids oder beider Verbindungen in den genannten Mengen.

7. Dispersion nach einem der Ansprüche 1 bis 6, **dadurch gekennzeichnet, daß** kein zusätzliches Dispersionsmittel oder Stabilisierungsmittel enthalten ist.

8. Verfahren zur Herstellung einer Dispersion gemäß einem der Ansprüche 1 bis 7, **dadurch gekennzeichnet, daß** man die heiße organische Ölphase aus der Synthese des optischen Aufhellers in kaltes Wasser einrührt, unter weiterem Rühren auf Umgebungstemperatur abkühlen läßt, mit 0,1 - 1 Gew.-% einer vorher hergestellten Dispersion beimpft und schließlich auf die richtige Einstellung verdünnt.

9. Verwendung einer Dispersion gemäß einem der Ansprüche 1 bis 7 zum optischen Aufhellen von Papier oder anderen cellulosehaltigen Substraten.

10. Verfahren zum Weißtönen von Papier, bei dem man als Hauptschritte
- eine Zellstoffsuspension bereitstellt,
- bezogen auf Trockenstoff 0,1 bis 5 Gew.-% einer Dispersion gemäß einem der Ansprüche 1 bis 7 zusetzt,
- aus der Zellstoffsuspension ein Papierblatt bildet,
- das Blatt preßt und trocknet.

11. Verfahren zum Weißtönen von Papier, bei dem man als Hauptschritte
- Kreide oder andere Weißpigmente, ein oder mehrere Dispersionsmittel, ein primäres Latexbindemittel und gegebenenfalls ein sekundäres Bindemittel und gegebenenfalls andere Zusatzstoffe zu einer wäßrigen Beschichtungsmasse vermischt,
- bezogen auf Trockenstoff 0,1 bis 5 Ges.-% einer Dispersion gemäß einem der Ansprüche 1 bis 7 zusetzt,
- die Beschichtungsmasse auf ein Papierblatt aufträgt,
- das gestrichene Papierblatt trocknet.

## Revendications

1. Dispersion aqueuse contenant comme substance active un ou plusieurs azurants optiques de formule (I) 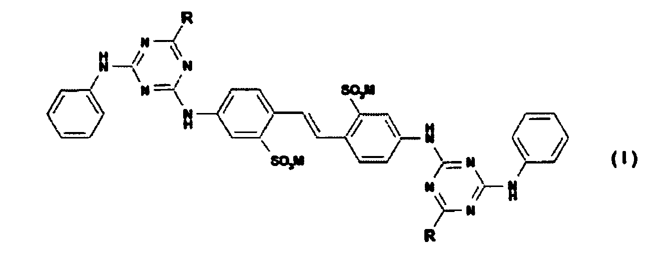 où
R représente un radical de formule (II), (III) ou (IV) 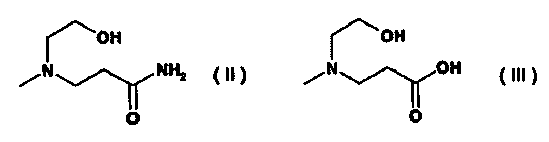 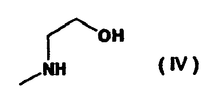 les deux radicaux R pouvant être identiques ou différents, et
M représente un cation de métal alcalin ou un cation ammonium non substitué ou substitué par un groupe alkyle ou hydroxyalkyle en C₁-C₄.

2. Dispersion selon la revendication 1, dans laquelle M représente Na⁺, Li⁺, K⁺ ou un cation ammonium substitué par un groupe alkyle ou hydroxyalkyle en C₁-C₂.

3. Dispersion selon la revendication 1 ou 2 contenant un mélange de 2 à 4 azurants optiques de formule (I) avec des R différents.

4. Dispersion selon l'une quelconque des revendications 1 à 3 contenant 10 à 40 % en poids de substance active.

5. Dispersion selon l'une quelconque des revendications 1 à 4 contenant 14 à 26 % en poids de substance active.

6. Dispersion selon l'une quelconque des revendications 1 à 5 contenant également de 0,01 % à 0,5 % en poids d'un agent antimousse, d'un biocide ou des deux composés dans lesdites quantités.

7. Dispersion selon l'une quelconque des revendications 1 à 6 **caractérisée en ce qu'**elle ne contient aucun dispersant ou stabilisant supplémentaire.

8. Procédé pour la préparation d'une dispersion selon l'une quelconque des revendications 1 à 7, **caractérisé en ce que** la phase huileuse organique chaude résultant de la synthèse de l'azurant optique est agitée dans de l'eau froide, mise à refroidir jusqu'à la température ambiante sous agitation continue, ensemencée avec 0,1 %-1 % en poids d'une dispersion préalablement préparée, et finalement diluée à la force appropriée.

9. Utilisation d'une dispersion selon l'une quelconque des revendications 1 à 7 pour le blanchiment optique de papier ou d'autres substrats cellulosiques.

10. Procédé pour le blanchiment de papier comprenant les étapes principales consistant à
- obtenir une suspension de pâte,
- ajouter 0,1 à 5 % en poids, rapporté aux fibres sèches, d'une dispersion selon l'une quelconque des revendications 1 à 7,
- préparer une feuille de papier à partir de ladite suspension de pâte,
- presser et sécher la feuille.

11. Procédé pour le blanchiment de papier comprenant les étapes principales consistant à
- préparer une composition aqueuse de revêtement en mélangeant de la craie ou d'autres pigments blancs, un ou plusieurs dispersants, un liant primaire à base de latex, éventuellement un liant secondaire, et éventuellement d'autres additifs,
- ajouter 0,1 à 5 % en poids, rapporté aux fibres sèches, d'une dispersion selon l'une quelconque des revendications 1 à 7,
- appliquer la composition de revêtement à une feuille de papier,
- sécher la feuille de papier couché.
